# EUROPÄISCHE PATENTSCHRIFT

(11) **EP 2 966 709 B1**
(45) Veröffentlichungstag und Bekanntmachung des Hinweises auf die Patenterteilung: **10.01.2018**
(21) Anmeldenummer: 14176415.9
(22) Anmeldetag: 09.07.2014
(51) Int. Cl.: H01M 4/24, H01M 4/32, H01M 4/36, H01M 4/38, H01M 4/583, H01M 10/34, H01M 10/44, H01M 12/00, H01M 2/02, H01M 4/04, H01M 4/80, H01M 10/26, H02J 7/00, H01M 10/42, H01G 9/00, H01M 4/02

(54) **Sekundäres elektrochemisches Element**
Secondary electrochemical element
Élement électrochimique secondaire

(43) Veröffentlichungstag der Anmeldung: 13.01.2016
(73) Patentinhaber: VARTA Microbattery GmbH, 73479 Ellwangen (DE)
(72) Erfinder: Pytlik, Edward, 73479 Ellwangen (DE); Ensling, David, 73479 Ellwangen (DE); Schula, Claudio, 73479 Ellwangen (DE); Scholz, Stefanie, 73479 Ellwangen (DE)
(74) Vertreter: Patentanwaltskanzlei Cartagena

(56) Entgegenhaltungen:
- EP-A1- 1 100 141
- EP-A2- 0 460 424
- WO-A2-03/088374
- DE-A1-102010 012 977
- JP-A- 2012 064 590
- WANG X F ET AL: "Application of spherical Ni(OH)2/CNTs composite electrode in asymmetric supercapacitor", TRANSACTIONS OF NONFERROUS METALS SOCIETY OF CHINA, NONFERROUS METALS SOCIETY OF CHINA, CN, Bd. 16, Nr. 5, 1. Oktober 2006 (2006-10-01), Seiten 1129-1134, XP022936111, ISSN: 1003-6326, DOI: 10.1016/S1003-6326(06)60389-0 [gefunden am 2006-10-01]

## Beschreibung

Die vorliegende Erfindung betrifft ein sekundäres elektrochemisches Element sowie ein Verfahren zum Laden eines solchen elektrochemischen Elements.
Es ist bekannt, flüchtige Speicher von Datenverarbeitungseinrichtungen sowohl mit wiederaufladbaren Batterien als auch mit Kondensatoren abzusichern. Eine wiederaufladbare Nickel-Metallhydrid-Batterie, die sich grundsätzlich für derartige Anwendungen eignet, ist beispielsweise in der EP 1 011 163 B1 beschrieben. Als Kondensatoren eignen sich für den genannten Zweck insbesondere sogenannte Doppelschichtkondensatoren ("supercaps"). Deren Verwendung als Energiequelle zur Absicherung der genannten flüchtigen Speicher ist beispielsweise in der DE 20 2004 017 545 U1 beschrieben.
Doppelschichtkondensatoren haben den Vorteil, dass sie sehr schnell sehr hohe Pulsströme liefern können. Ihre Kapazität ist allerdings entsprechend der Natur eines Kondensators begrenzt. Darüber hinaus weisen die meisten Doppelschichtkondensatoren ein organisches Elektrolytsystem auf, das bei einer Überladung ein Sicherheitsrisiko darstellen kann.
Die in der EP 1 011 163 B1 beschriebenen Batterien weisen eine deutlich höhere Kapazität auf als Doppelschichtkondensatoren. Allerdings können die in Datenverarbeitungseinrichtungen im Betrieb vorherrschenden relativ hohen Temperaturen leicht zu einer Überladung führen. Ein Sicherheitsrisiko ist damit in der Regel nicht verbunden, allerdings kann die Überladung zu einer drastischen Verringerung der Lebenserwartung der Batterien führen.

In der EP 0460 424 A2 wird ein aus dem Stand der Technik bekanntes elektrochemisches Element offenbart.

Der vorliegenden Erfindung lag die Aufgabe zugrunde, eine Energiequelle für flüchtige Speicher von Datenverarbeitungseinrichtungen bereitzustellen, die die angegebenen Nachteile des Standes der Technik nicht aufweist.
Diese Aufgabe wird gelöst durch das sekundäre elektrochemische Element mit den Merkmalen des Anspruchs 1. Bevorzugte Ausführungsformen des elektrochemischen Elements sind in den abhängigen Ansprüchen 2 bis 7 angegeben.
Der Wortlaut sämtlicher Ansprüche wird hiermit durch Bezugnahme zum Inhalt dieser Beschreibung gemacht.
Das erfindungsgemäße sekundäre elektrochemische Element umfasst eine negative Elektrode, eine positive Elektrode, einen porösen Separator, der die negative und die positive Elektrode voneinander trennt sowie einen wässrigen alkalischen Elektrolyten, mit dem die Elektroden und der Separator getränkt sind. Bei dem erfindungsgemäßen elektrochemischen Element handelt es sich um ein sekundäres elektrochemisches Element. Mit anderen Worten, Lade- und Entladevorgänge sind reversibel.
Die negative Elektrode enthält einen Stromableiter sowie ein kohlenstoffbasiertes Speichermaterial, das die Speicherung von elektrischer Ladung in der Elektrode durch Ausbildung einer elektrischen Doppelschicht (Helmholtz-Doppelschicht) ermöglicht. Die negative Elektrode enthält zusätzlich ein nicht kohlenstoffbasiertes Speichermaterial, das Wasserstoff chemisorbieren und/oder in Form eines Metallhydrids speichern kann (im Folgenden als H2-Speichermaterial bezeichnet).
Die positive Elektrode enthält ebenfalls einen Stromableiter. Darüber hinaus enthält sie Nickelhydroxid (Ni(OH)₂) und/oder Nickeloxyhydroxid (NiO(OH)).
Besonders zeichnet sich das erfindungsgemäße elektrochemische Element dadurch aus, dass die negative Elektrode das kohlenstoffbasierte Speichermaterial in einem Anteil von mindestens 5 Gew.-% enthält. Die negative Elektrode enthält das kohlenstoffbasierte Speichermaterial in einem Anteil von zwischen 5 Gew.-% und 14,9 Gew.-%. An Stelle der im vorangehenden Absatz genannten Bereichsuntergrenzen kann die Untergrenze für den Anteil an kohlenstoffbasiertem Speichermaterial in den genannten Bereichen auch 5,5 Gew.-%, bevorzugt 6 Gew.-%, insbesondere 6,5 Gew.-%, betragen.
Alle genannten Prozentangaben beziehen sich auf das Gesamtgewicht der negativen Elektrode in trockenem Zustand (also ohne Elektrolyt), abzüglich des Gewichts des Stromableiters, das nicht berücksichtigt wird.

Positive Elektroden auf Basis von Nickelhydroxid / Nickeloxyhydroxid werden klassisch vor allem in Nickel-Metallhydrid-Akkumulatoren eingesetzt. Beim Ladevorgang wandelt sich Nickelhydroxid unter Aufnahme eines Hydroxid-Ions und unter Abgabe eines Wassermoleküls und eines Elektrons in Nickeloxyhydroxid um. Umgekehrt nimmt Nickeloxyhydroxid beim Entladen ein Elektron auf und wandelt sich mit Wasser unter Abgabe eines Hydroxid-Ions in Nickelhydroxid um. Theoretisch ist es somit möglich, dass eine positive Elektrode in vollständig geladenem Zustand ausschließlich Nickeloxyhydroxid aufweist und in vollständig entladenem Zustand ausschließlich Nickelhydroxid. In der Praxis liegen die beiden Verbindungen in Elektroden aber meist nebeneinander vor, wobei das Mengenverhältnis der Verbindungen zueinander vom Ladezustand der Elektroden abhängt.

Gemäß der vorliegenden Erfindung umfasst die negative Elektrode eine Kombination aus dem kohlenstoffbasierten Speichermaterial und dem nicht kohlenstoffbasierten H2-Speichermaterial. Die negative Elektrode umfasst das H2-Speichermaterial in einem Anteil zwischen 85 Gew.-% und 94,9 Gew.-%. Alle genannten Prozentangaben beziehen sich auch hier auf das Gesamtgewicht der negativen Elektrode in trockenem Zustand (also ohne Elektrolyt), abzüglich des Gewichts des Stromableiters.
Beim Vorliegen einer solchen Kombination vermag die negative Elektrode elektrische Ladung nicht nur durch Ausbildung der erwähnten Doppelschicht zu speichern. Vielmehr kann elektrische Ladung auch chemisch auf dem Umweg über eine reversible Redoxreaktion gespeichert werden. Beim Laden des erfindungsgemäßen elektrochemischen Elements können begleitend zur Ausbildung einer Doppelschicht Wassermoleküle aus dem wässrigen Elektrolyten unter Aufnahme eines Elektrons reduziert werden. Der dabei entstehende Wasserstoff kann von dem H2-Speichermaterial aufgenommen und mittels Chemisorption und/oder in Form eines Metallhydrids gespeichert werden. Beim Entladen kehrt sich diese Reaktion um. Hydridischer Wasserstoff kann mit Hydroxid-Ionen aus dem wässrigen alkalischen Elektrolyten unter Abgabe eines Elektrons zu Wasser reagieren. Kurzum: Die negative Elektrode eines erfindungsgemäßen elektrochemischen Elements kann pseudokapazitive Eigenschaften aufweisen.

Das erfindungsgemäße elektrochemische Element ist wie ein Kondensator dazu in der Lage, sehr schnell hohe Pulsströme liefern zu können, weist dabei aber eine höhere Kapazität auf als ein Kondensator sowie eine höhere Überladestabilität bei hohen Temperaturen als eine klassische Nickel-Metallhydrid-Batterie. Letztere dürfte insbesondere auf das kohlenstoffbasierte Speichermaterial in der negativen Elektrode zurückzuführen sein, das zu einem Verzehr in Folge einer Überladung entstandenen Sauerstoffs beitragen kann. Diese Eigenschaft ermöglicht es im Übrigen auch, das Gehäuse eines erfindungsgemäßen sekundären elektrochemischen Elements gasdicht auszubilden.
Als zur Ausbildung einer elektrischen Doppelschicht befähigtes kohlenstoffbasiertes Speichermaterial kommen erfindungsgemäß Aktivkohle und Graphen zur Verwendung. Bei Aktivkohle handelt es sich bekanntlich um einen porösen, feinkörnigen Kohlenstoff mit einer sehr großen inneren Oberfläche. Besonders bevorzugt ist im Rahmen der vorliegenden Erfindung Aktivkohle, die eine BET-Oberfläche von mindestens 900 m²/g (bestimmt gemäß DIN ISO 9277) und einem Kapazitätswert von mindestens 60 F/g aufweist (bestimmt gemäß DIN IEC 62391).
Bei Graphen handelt es sich um eine Kohlenstoffmodifikation mit zweidimensionaler Struktur. Eine Vielzahl von verketteten Benzol-Ringen bildet ein bienenwabenförmiges Muster aus, in dem jedes Kohlenstoffatom im Winkel von 120° von drei weiteren Kohlenstoffatomen umgeben ist und wobei alle Kohlenstoffatome sp²-hybridisiert sind. Graphen bietet die theoretisch größte mit Kohlenstoff erreichbare Oberfläche pro Gewichtseinheit und ist daher aktuell Gegenstand intensiver Untersuchungen im Zusammenhang mit der Entwicklung von Superkondensatoren. Sowohl Graphen als auch Aktivkohle sind darüber hinaus in der Lage, Wasserstoff zu speichern. Unter anderem diese Eigenschaft macht sie als Elektrodenaktivmaterial für die negative Elektrode des erfindungsgemäßen elektrochemischen Elements so interessant.
Selbstverständlich können Graphen und Aktivkohle auch in Kombination miteinander verwendet werden. Hierbei ist jedes Mischungsverhältnis denkbar.

Als H2-Speichermaterial kommen aus dem Bereich der Nickel-Metallhydrid-Batterien bekannte Wasserstoffspeicherlegierungen, nämlich eine AB₂-Legierung, eine AB₅-Legierung, eine A₂B₇-Legierung oder eine AB₃-Legierung zum Einsatz. AB₂-Legierungen basieren in der Regel auf Titan und Nickel im effektiven Verhältnis 1:2. In der Praxis werden das Titan und das Nickel häufig teilweise durch einen oder mehrere Zusätze, insbesondere aus der Gruppe mit Chrom, Vanadium oder Zirkonium, ersetzt.

Bei AB₅-Legierungen handelt es sich meist um Mischungen aus Lanthan und Nickel im effektiven Verhältnis 1:5. In der Praxis werden das Lanthan und das Nickel häufig teilweise durch einen oder mehrere Zusätze, insbesondere aus der Gruppe mit Mangan, Nickel, Kupfer, Chrom, Aluminium, Kobalt, Zink, Zirkonium oder Cer, ersetzt.
Alternativ oder zusätzlich können an Stelle der erwähnten Legierungen oder zusätzlich zu diesen auch A₂B₇- oder AB₃-Legierungen verwendet werden. Auch diese Legierungstypen wurden bereits im Zusammenhang mit Nickel-Metallhydrid-Batterien diskutiert. Beispiele für Legierungen dieser Art sind beispielsweise La₁₆,₃Mg₇,₀Ni₆₅,₁Co_{11,6} (A₂B₇) oder La_{0,7}Mg_{0,3}Ni₃₋ₓFeₓ (AB₃ mit x = 0 - 0,4).
Das Nickelhydroxid und/oder Nickeloxyhydroxid wird bevorzugt in Form von sphärischen Partikeln eingesetzt. Weiterhin kann es bevorzugt sein, dass die eingesetzten Partikel eine Oberfläche aufweisen, die zumindest teilweise mit Kobalt beschichtet ist.
In aller Regel enthält die positive Elektrode das Nickelhydroxid und/oder das Nickeloxyhydroxid in einem Anteil zwischen 10 Gew.-% und 100 Gew.-%, bevorzugt zwischen 25 Gew.-% und 100 Gew.-%, insbesondere zwischen 50 Gew.-% und 100 Gew.-%.
Diese Prozentangaben beziehen sich auf das Gesamtgewicht der positiven Elektrode in trockenem Zustand (also ohne Elektrolyt), abzüglich des Gewichts des enthaltenen Stromableiters.
Neben den genannten Komponenten können die negative und die positive Elektrode gegebenenfalls noch eine oder mehrere zusätzliche Komponenten aufweisen.

Für die negative Elektrode kommen die folgenden zusätzlichen Komponenten in den folgenden Anteilen zum Einsatz:
- 0,1 Gew.-% bis 10 Gew.-%, bevorzugt 1 Gew.-% bis 5 Gew.-%, eines Elektrodenbinders und bevorzugt
- 0,1 Gew.-% bis 10 Gew.-%, bevorzugt 1 Gew.-% bis 5 Gew.-%, eines Leitmittels Diese Komponenten können der negativen Elektrode einzeln oder in Kombination zugesetzt sein. Die negative Elektrode umfasst die folgenden Komponenten in den folgenden Anteilen:
- zwischen 85 Gew.-% und 94,9 Gew.-%, des H2-Speichermaterials
- zwischen 5 Gew.-% und 14,9 Gew.-%, des kohlenstoffbasierten Speichermaterials
- zwischen 0,1 Gew.-% und 10 Gew.-%, bevorzugt zwischen 0,1 Gew.-% und 5 Gew.-%, des Elektrodenbinders

In einer Weiterbildung umfasst die negative Elektrode bevorzugt die folgenden Komponenten in den folgenden Anteilen:
- zwischen 90 Gew.-% und 99,9 Gew.-%, insbesondere zwischen 95 Gew.-% und 99,9 Gew.-%, des kohlenstoffbasierten Speichermaterials
- zwischen 0,1 Gew.-% und 10 Gew.-%, bevorzugt zwischen 0,1 Gew.-% und 5 Gew.-%, des Elektrodenbinders
Für die positive Elektrode kommen insbesondere die folgenden zusätzlichen Komponenten in den folgenden Anteilen in Frage:
- 0,1 Gew.-% bis 10 Gew.-%, bevorzugt 1 Gew.-% bis 5 Gew.-%, eines Elektrodenbinders
- 0,1 Gew.-% bis 90 Gew.-%, bevorzugt 0,1 Gew.-% bis 50 Gew.-%, besonders bevorzugt 0,1 Gew.-% bis 40 Gew.-%, insbesondere 0,1 Gew.-% bis 20 Gew.-%, eines Leitmittels
- ein kohlenstoffbasiertes Speichermaterial, das die Speicherung von elektrischer Ladung in der Elektrode durch Ausbildung einer elektrischen Doppelschicht (Helmholtz-Doppelschicht) ermöglicht, insbesondere in einem Anteil von 0,1 Gew.-% bis 20 Gew.-%
Diese Komponenten können der positiven Elektrode einzeln oder in Kombination zugesetzt sein.

In einer Weiterbildung umfasst die positive Elektrode besonders bevorzugt die folgenden Komponenten in den folgenden Anteilen:
- zwischen 50 Gew.-% und 99,8 Gew.-% Nickelhydroxid und/oder Nickeloxyhydroxid
- zwischen 0,1 Gew.-% und 40 Gew.-%, bevorzugt zwischen 0,1 Gew.-% und 45 Gew.-%, des Leitmittels
- zwischen 0,1 Gew.-% und 10 Gew.-%, bevorzugt zwischen 0,1 Gew.-% und 5 Gew.-%, des Elektrodenbinders

Selbstverständlich gilt auch für all diese bevorzugten Ausführungsformen, dass sich diese Prozentangaben jeweils auf das Gesamtgewicht der positiven Elektrode und der negativen Elektrode in trockenem Zustand (also ohne Elektrolyt) beziehen, abzüglich des Gewichts des jeweiligen Stromableiters.

Weiterhin gilt, das sich in allen angegebenen sowie in allen aus obigen Angaben ableitbaren Zusammensetzungen für die positive und die negative Elektrode die Prozentanteile der jeweils enthaltenen Komponenten in aller Regel auf 100 Gew.-% addieren.

Bei dem Leitmittel handelt es sich bevorzugt um ein Metallpulver, insbesondere um Nickel- und/oder Kobaltpulver. Alternativ oder zusätzlich können auch kohlenstoffbasierte Leitmittel wie Ruß, Graphit, Kohlenstoffnanoröhrchen (CNTs), Nanokohlenstoffe oder im Fall der positiven Elektrode auch Graphen verwendet werden.

Als Elektrodenbinder wird im Rahmen der vorliegenden Erfindung bevorzugt ein zellulosebasierter Binder, beispielsweise Carboxymethylzellulose oder ein Derivat von Carboxymethylzellulose, verwendet. Besonders geeignet sind auch wasserlösliche Zelluloseether wie bespielsweise Methylhydroxyethylzellulose (MHEC), Methylhydroxypropylzellulose (MHPC) und Hydroxyethylzellulose (HEC). Alternativ kommen aber auch Polyacrylate oder kunststoffbasierte Binder wie zum Beispiel PTFE-Binder (PTFE = Polytetrafluorethylen) oder Binder auf Basis von SBR (Styrene-Butadiene-Rubber) in Frage.

Die Elektroden eines erfindungsgemäßen elektrochemischen Elements müssen nicht zwingend einen Elektrodenbinder enthalten. Sie können beispielsweise auch binderfrei als Sinterelektroden oder als Presslinge gefertigt werden.

Für das kohlenstoffbasierte Speichermaterial, das in bevorzugten Ausführungsformen in der positiven Elektrode enthalten sein kann, kommen die gleichen Materialien in Frage wie im Fall der negativen Elektrode. Es kommen also vor allem Aktivkohle mit den oben genannten Eigenschaften und Graphen in Frage.
Neben den genannten Zusätzen können die positive und/oder die negative Elektrode noch weitere Zusätze enthalten. Beispielhaft zu nennen sind in diesem Zusammenhang insbesondere Kobaltoxid, Kobalthydroxid, Zinksulfat oder Kalziumhydroxid. Der Stromableiter der positiven und der negativen Elektrode bilden eine dreidimensionale Leitmatrix, in die das jeweilige Speichermaterial und/oder das Nickelhydroxid und/oder das Nickeloxyhydroxid eingebettet ist. Erfindungsgemäß kommen auf Seite der positiven und der negativen Elektrode als Stromableiter metallische oder metallbeschichtete offenporige Schäume zum Einsatz. Derartige Ableiter kommen klassisch vor allem auf der Seite der positiven Elektrode von Nickel-Cadmium- oder Nickel-Metallhydrid-Akkumulatoren in Knopfzellenform zum Einsatz. Beispielhaft wird in diesem Zusammenhang auf die EP 0 658 949 B1 verwiesen. Die erwähnten Schäume sind kommerziell erhältlich. Bevorzugt bestehen sie aus Nickel oder Kupfer oder sind mit einem dieser Metalle beschichtet. Erfindunggemäß weisen das kohlenstoffbasierte Speichermaterial und das H2-Speichermaterial in der negativen Elektrode, insbesondere in der erwähnten dreidimensionalen Leitmatrix aus dem Stromableiter, eine gleichmäßige Verteilung auf. Dies gilt insbesondere, wenn die negative Elektrode die genannte erfindungsgemäße Kombination aus dem kohlenstoffbasierten Speichermaterial und dem nicht kohlenstoffbasierten H2-Speichermaterial umfasst. Diese können zur Herstellung der Elektrode miteinander sowie gegebenenfalls mit einem oder mehreren der weiteren genannten Zusätze vermischt und, beispielsweise als Paste, in einem Schritt gemeinsam zu der Elektrode verarbeitet werden.

Sowohl der Separator als auch die positive und die negative Elektrode sind bevorzugt in Form von dünnen Schichten ausgebildet. Sie können beispielsweise in Form von Bändern oder flachen Streifen bereitgestellt werden. Im Falle der Elektroden sind Schichten mit einer Dicke zwischen 50 µm und 500 µm bevorzugt. Die Dicke des verwendeten Separators liegt bevorzugt im Bereich zwischen 10 µm und 100 µm.
Bei dem Separator eines erfindungsgemäßen elektrochemischen Elements handelt es sich bevorzugt um eine poröse Kunststofffolie, insbesondere um eine Folie aus einem Polyolefin, aus PEEK (Polyetheretherketon) oder aus PES (Polyethersulfon). Es können ohne weiteres aber auch Separatoren aus Papier oder aus einem Vlies eingesetzt werden. Im Grunde ist lediglich erforderlich, dass der Separator eine ausreichende Porosität aufweist, um von dem Elektrolyten durchdrungen zu werden und dass er gegenüber diesem stabil ist.
Das erfindungsgemäße elektrochemische Element liegt bevorzugt als Verbund mit der Schichtsequenz positive Elektrode / Separator / negative Elektrode vor. Besonders bevorzugt kann das elektrochemische Element in Form einer Bizelle vorliegen, also mit der Schichtsequenz positive Elektrode / Separator / negative Elektrode / Separator / positive Elektrode oder negative Elektrode / Separator / positive Elektrode / Separator / negative Elektrode.

Die Elektroden eines erfindungsgemäßen elektrochemischen Elements werden bevorzugt kalandriert, bevor sie miteinander sowie mit dem Separator zu einem erfindungsgemäßen elektrochemischen Element kombiniert werden.
Der erwähnte Verbund mit der Schichtsequenz positive Elektrode / Separator / negative Elektrode liegt in einigen bevorzugten Ausführungsformen in Form eines spiralförmigen Wickels vor. Zu Herstellung eines solchen spiralförmigen Wickels können beispielsweise eine bandförmige positive Elektrode und eine bandförmige negative Elektrode mit zwei Separatorbändern mittels eines Laminations- oder Klebevorgangs zu einem Verbund der Sequenz Separator / negative Elektrode / Separator / positive Elektrode kombiniert und anschließend aufgewickelt werden.
Natürlich ist es alternativ auch möglich, mehrere elektrochemische Elemente aus positiver und negativer Elektrode sowie aus einem oder mehreren Separatoren übereinander zu stapeln. Ein möglicher Aufbau eines entsprechenden Stapels ist beispielsweise in der EP 1 011 163 B1 dargestellt.
Auch ein Zellverbund aus zwei oder mehr erfindungsgemäßen elektrochemischen Elementen ist Gegenstand der vorliegenden Erfindung. Gegebenenfalls können die zwei oder mehr elektrochemischen Elemente in dem Zellverbund parallel zueinander oder in Reihe geschaltet sein. Bei der Balancierung eines solchen Zellenverbunds kann sich die erwähnte hohe Überladestabilität als besonders vorteilhaft erweisen. Um alle Zellen des Verbundes wieder auf ein identisches Spannungsniveau zu bringen, kann der Zellverbund gezielt überladen werden. Dies ist in aller Regel nicht möglich, ohne zumindest einzelne Zellen / Elemente des Verbundes irreparabel zu schädigen. Aufgrund des kohlenstoffbasierten Speichermaterials in den negativen Elektroden der elektrochemischen Elemente des Zellverbunds, das zum Verzehr von bei der Überladung erzeugtem Sauerstoff beitragen kann, ist vorliegend die Gefahr einer solchen Schädigung jedoch minimiert.

In bevorzugten Ausführungsformen sind zwei oder mehr erfindungsgemäße elektrochemische Elemente in einer bipolaren Anordnung miteinander kombiniert. Eine bipolare Anordnung elektrochemischer Elemente zeichnet sich dadurch aus, dass einzelne elektrochemische Elemente als Subzellen fungieren und durch leitende Zwischenwände in Reihe verschaltet sind. Jede Subzelle besitzt dabei eine positive und eine negative Elektrode, die durch einen elektrolytgetränkten Separator voneinander getrennt sind. Zwischen benachbarten Subzellen befindet sich eine Verbindungswand. Diese stellt eine elektrische Verbindung zwischen der positiven Elektrode der einen Zelle und der negativen Elektrode der anderen Zelle her. Gleichzeitig separiert sie die Elektrolyträume der Subzellen voneinander.

Der wässrige Elektrolyt eines erfindungsgemäßen elektrochemischen Elements weist bevorzugt zwischen 0,1 M und 10 M mindestens einer gelöst vorliegenden Hydroxidverbindung auf. Besonders bevorzugt enthält der Elektrolyt als Hydroxidverbindung mindestens ein Metallhydroxid, insbesondere Natrium- oder Kaliumhydroxid.

Besonders bevorzugt enthält der Elektrolyt zusätzlich zu der Hydroxidverbindung mindestens eine Sulfatverbindung, insbesondere ein Alkali- oder Erdalkalisulfat. Bevorzugt ist die mindestens eine Sulfatverbindung in einer Konzentration zwischen 0,001 Gew.-% und 0,1 Gew.-% in dem Elektrolyten enthalten.

In bevorzugten Ausführungsformen enthält der Elektrolyt ein sekundäres Leitsalz mit PO₄³⁻, NO₃⁻ oder Cl⁻ Anionen und metallischen Gegenionen.

Dem Elektrolyten können weiterhin auch Additive zugegeben werden wie beispielsweise Verdicker, Korrosionsinhibitoren, Netzmittel und Frostschutzmittel.

Besonders bevorzugt weist das elektrochemische Element ein Gehäuse aus Edelstahl oder aus einem vernickelten Stahl oder Edelstahl auf, das die Elektroden, den Separator und den Elektrolyten flüssigkeitsdicht und in bevorzugten Ausführungsformen auch gasdicht umschließt. Unter einem gasdichten Verschluss soll hierbei verstanden werden, dass in der Zelle gebildetes Gas nicht aus dem Gehäuse entweichen kann, ohne es dabei zu zerstören. Das Gehäuse umfasst also kein Mittel zu einer gezielten Entlüftung wie beispielsweise ein Ventil. Allerdings kann aus Sicherheitsgründen eine Berstmembran vorgesehen sein, die bei Überschreiten eines Druckschwellenwerts irreversibel zerstört wird.

Das Gehäuse kann beispielsweise als Knopfzellengehäuse ausgebildet sein, beispielsweise als Gehäuse, wie es in der bereits erwähnten EP 1 011 163 B1 dargestellt ist. Alternativ kann das erfindungsgemäße elektrochemische Element aber auch Flachzelle ausgebildet sein, wie sie beispielsweise in der EP 1 391 947 A1 beschrieben ist. In diesem Fall wird ihr Gehäuse aus dünnen Metallfolien gebildet, die über eine Siegelschicht miteinander verbunden sind.

Insbesondere, wenn der oben beschriebene Verbund mit der Schichtsequenz positive Elektrode / Separator / negative Elektrode in Form eines spiralförmigen Wickels vorliegt, kann das Gehäuse auch als zylindrisches Rundzellengehäuse ausgebildet sein.

Beim Laden eines elektrochemischen Elements gemäß der vorliegenden Erfindung wird bevorzugt während des Ladevorgangs seine Temperatur und/oder die Umgebungstemperatur gemessen. Beim Überschreiten eines Temperaturschwellenwerts wird dann die Ladespannung abgesenkt, insbesondere um einen Wert zwischen 0,6 mV / °C und 1,8 mV / °C, insbesondere um einen Wert von 1,2 mV ± 0,1 mV / °C.

Als Temperaturschwellenwert wird bevorzugt eine Temperatur im Bereich zwischen 40 °C bis 60 °C, bevorzugt von 45 °C, gewählt. Die Ladespannung unterhalb des Temperaturschwellenwerts liegt vorzugsweise im Bereich zwischen 1,35 V und 1,5 V, vorzugsweise beträgt sie 1,4 V. Die Laderate liegt während des gesamten Ladevorgangs im Bereich zwischen 0,2 C und 10 C. Sie wird bevorzugt während des Ladevorgangs konstant gehalten.

Alternativ kann die Temperaturkompensation der Ladespannung auch kontinuierlich über den Gesamten für die jeweilige Anwendung relevanten Temperaturbereich erfolgen, bevorzugt zwischen +10°C und +70°C. Die Ladeschlussspannung wird in Abhängigkeit von Temperatur, Stromstärke und Elektroden- bzw. Elektrolytzusammensetzung ermittelt.

Weitere Vorteile und Aspekte der Erfindung ergeben sich außer aus den Ansprüchen auch aus der nachfolgenden Beschreibung eines bevorzugten Ausführungsbeispiels der Erfindung.

### Ausführungsbeispiele

### (1) Herstellung einer ersten Ausführungsform eines erfindungsgemäßen elektrochemischen Elements

Zur Bildung positiver Elektroden wurde eine wässrige Aktivmaterial-Paste auf einen offenporigen Nickelschaum aufgebracht. Der Feststoffanteil der Paste setzte sich aus den folgenden Komponenten zusammen:
- 90 Gew.-% Ni(OH)₂,
- 4 Gew.-% Kobalt-Pulver als Leitmittel
- 4 Gew.-% Ruß als weiteres Leitmittel
- 2 Gew.-% eines wasserlöslichen Zelluloseethers als Binder

Zur Bildung negativer Elektroden wurde eine wässrige Aktivmaterial-Paste auf einen offenporigen Nickelschaum aufgebracht. Der Feststoffanteil der Paste setzte sich aus den folgenden Komponenten zusammen:
- 7,5 Gew.-% Aktivkohle mit einer BET-Oberfläche > 900 m²/g
- 90 Gew.-% einer A₂B₇-Legierung
- 2,5 Gew.-% eines wasserlöslichen Zelluloseethers als Binder

Die Elektroden wurden jeweils getrocknet und einem Walzvorgang unterworfen. Danach wiesen sie eine Dicke von ca. 250 µm auf. Anschließend wurden mit einem Separator aus Polypropylen (non-woven, Dicke 80 µm) zu einem Elektrodensatz verbaut, wie er in der EP 1 011 163 B1 beschrieben ist, mit einem wässrigen Elektrolyten getränkt (6M KOH-Lösung) und in einem Gehäuse aus vernickeltem Edelstahl verbaut.

### (2) Herstellung eines nicht erfindungsgemäßen elektrochemischen Elements

Zur Bildung positiver Elektroden wurde eine wässrige Aktivmaterial-Paste auf einen offenporigen Nickelschaum aufgebracht. Der Feststoffanteil der Paste setzte sich aus den folgenden Komponenten zusammen:
- 50 Gew.-% Ni(OH)₂,
- 8 Gew.-% Ruß als Leitmittel
- 40 Gew.-% Graphit als weiteres Leitmittel
- 2 Gew.-% eines wasserlöslichen Zelluloseethers als Binder

Zur Bildung negativer Elektroden wurde eine wässrige Aktivmaterial-Paste auf einen offenporigen Nickelschaum aufgebracht. Der Feststoffanteil der Paste setzte sich aus den folgenden Komponenten zusammen:
- 97,5 Gew.-% Aktivkohle mit einer BET-Oberfläche > 900 m²/g
- 2,5 Gew.-% eines wasserlöslichen Zelluloseethers als Binder

Die Elektroden wurden jeweils getrocknet und einem Walzvorgang unterworfen. Danach wiesen sie eine Dicke von ca. 250 µm auf. Anschließend wurden mit einem Separator aus Polypropylen (non-woven, Dicke 80 µm) zu einem Elektrodensatz verbaut, wie er in der EP 1 011 163 B1 beschrieben ist, mit einem wässrigen Elektrolyten getränkt (6M KOH-Lösung) und in einem Gehäuse aus vernickeltem Edelstahl verbaut. KOH-Lösung) und in einem Gehäuse aus vernickeltem Edelstahl verbaut.

### (3) Herstellung einer zweiten

### Ausführungsform eines erfindungsgemäßen elektrochemischen Elements

Zur Bildung positiver Elektroden wurde eine wässrige Aktivmaterial-Paste auf einen offenporigen Nickelschaum aufgebracht. Der Feststoffanteil der Paste setzte sich aus den folgenden Komponenten zusammen:
- 60 Gew.-% Ni(OH)₂,
- 8 Gew.-% Ruß als Leitmittel
- 30 Gew.-% Graphit als weiteres Leitmittel
- 2 Gew.-% eines wasserlöslichen Zelluloseethers als Binder

Zur Bildung negativer Elektroden wurde eine wässrige Aktivmaterial-Paste auf einen offenporigen Nickelschaum aufgebracht. Der Feststoffanteil der Paste setzte sich aus den folgenden Komponenten zusammen:
- 87,5 Gew.-% Aktivkohle mit einer BET-Oberfläche > 900 m²/g
- 10 Gew.-% einer A₂B₇-Legierung
- 2,5 Gew.-% eines wasserlöslichen Zelluloseethers als Binder

Die Elektroden wurden jeweils getrocknet und einem Walzvorgang unterworfen. Danach wiesen sie eine Dicke von ca. 250 µm auf. Anschließend wurden mit einem Separator aus Polypropylen (non-woven, Dicke 80 µm) zu einem Elektrodensatz verbaut, wie er in der EP 1 011 163 B1 beschrieben ist, mit einem wässrigen Elektrolyten getränkt (6M KOH-Lösung) und in einem Gehäuse aus vernickeltem Edelstahl verbaut.

## Patentansprüche

1. Sekundäres elektrochemisches Element umfassend
1.1 eine negative Elektrode enthaltend
1.1.1 einen Stromableiter,
1.1.2 als kohlenstoffbasiertes Speichermaterial, das die Speicherung von elektrischer Ladung in der Elektrode durch Ausbildung einer elektrischen Doppelschicht (Helmholtz-Doppelschicht) ermöglicht, Aktivkohle und/oder Graphen und
1.1.3 ein nicht kohlenstoffbasiertes H2-Speichermaterial, das Wasserstoff chemisorbieren und/oder in Form eines Metallhydrids speichern kann,
1.2 eine positive Elektrode enthaltend
1.2.1 einen Stromableiter sowie
1.2.2 Nickelhydroxid und/oder Nickeloxyhydroxid,
1.3 einen porösen Separator, der die negative und die positive Elektrode voneinander trennt, sowie
1.4 einen wässrigen, alkalischen Elektrolyten, mit dem die Elektroden und der Separator getränkt sind, wobei
1.5 die negative Elektrode das kohlenstoffbasierte Speichermaterial in einem Anteil von zwischen 5 Gew.-% und 14,9 Gew.-% enthält,
1.6 die negative Elektrode das H2-Speichermaterial in einem Anteil zwischen 85 Gew.-% und 94,9 Gew.-% umfasst,
1.7 die negative Elektrode einen Elektrodenbinder in einem Anteil zwischen 0,1 Gew.-% und 10 Gew.-% umfasst,
1.8 das kohlenstoffbasierte Speichermaterial und das H2-Speichermaterial in der negativen Elektrode eine gleichmäßige Verteilung aufweisen, **dadurch gekennzeichnet, dass**
1.9 das H2-Speichermaterial eine AB₂-Legierung, eine AB₅-Legierung, eine A₂B₇-Legierung oder eine AB₃-Legierung ist, und
1.10 der Stromableiter der positiven und der negativen Elektrode aus einem metallischen Schaum gebildet ist.

2. Sekundäres elektrochemisches Element nach Anspruch 1 oder Anspruch 2, **dadurch gekennzeichnet, dass** die negative und/oder die positive Elektrode ein Leitmittel enthält:

3. Sekundäres elektrochemisches Element nach einem der vorhergehenden Ansprüche, **dadurch gekennzeichnet, dass** der Stromableiter der positiven und/oder der negativen Elektrode eine dreidimensionale Leitmatrix bildet, in die das jeweilige Speichermaterial, im Falle der positiven Elektrode das Nickelhydroxid und/oder das Nickeloxyhydroxid, eingebettet ist.

4. Sekundäres elektrochemisches Element nach einem der vorhergehenden Ansprüche, **dadurch gekennzeichnet, dass** die positive und/oder die negative Elektrode als dünne Schichten ausgebildet sind mit einer Dicke zwischen 50 µm und 500 µm.

5. Sekundäres elektrochemisches Element nach einem der vorhergehenden Ansprüche, **dadurch gekennzeichnet, dass** der wässrige Elektrolyt eine gelöste Hydroxidverbindung in einem Anteil zwischen 0,1 M und 10 M enthält.

6. Sekundäres elektrochemisches Element nach einem der vorhergehenden Ansprüche, **dadurch gekennzeichnet, dass** der wässrige Elektrolyt eine Sulfatverbindung, insbesondere ein Alkali oder Erdalkalisulfat, aufweist, insbesondere in einer Konzentration zwischen 0,001 und 0,1 Gew.%.

7. Sekundäres elektrochemisches Element nach einem der vorhergehenden Ansprüche, **dadurch gekennzeichnet, dass** es ein gas- und/oder flüssigkeitsdichtes Gehäuse aus Edelstahl oder aus vernickeltem Stahl oder Edelstahl umfasst, das die Elektroden, den Separator und den Elektrolyten flüssigkeitsdicht einschließt.

## Claims

1. Secondary electrochemical element comprising
1.1 a negative electrode containing
1.1.1 an output conductor,
1.1.2 as carbon-based storage material which enables the storage of electrical charge in the electrode through formation of an electrical double layer (Helmholtz double layer), activated carbon and/or graphene
and
1.1.3 a non-carbon-based H2 storage material which can chemisorb hydrogen and/or store it in the form of a metal hydride,
1.2 a positive electrode containing
1.2.1 an output conductor and
1.2.2 nickel hydroxide and/or nickel oxyhydroxide,
1.3 a porous separator which separates the negative electrode and the positive electrode from one another, and
1.4 an aqueous alkaline electrolyte with which the electrodes and the separator are soaked, wherein
1.5 the negative electrode contains the carbon-based storage material in a proportion of between 5% by weight and 14.9% by weight,
1.6 the negative electrode comprises the H2 storage material in a proportion between 85% by weight and 94.9% by weight,
1.7 the negative electrode comprises an electrode binder in a proportion between 0.1% by weight and 10% by weight,
1.8 the carbon-based storage material and the H2 storage material have a homogeneous distribution in the negative electrode,
**characterized in that**
1.9 the H2 storage material is an AB₂ alloy, an AB₅ alloy, an A₂B₇ alloy or an AB₃ alloy, and
1.10 the output conductor of the positive electrode and the negative electrode is formed of a metallic foam.

2. Secondary electrochemical element according to Claim 1 or Claim 2, **characterized in that** the negative electrode and/or the positive electrode comprises a conductor.

3. Secondary electrochemical element according to any of the preceding claims, **characterized in that** the output conductor of the positive electrode and/or the negative electrode forms a three-dimensional matrix into which the respective storage material - the nickel hydroxide and/or nickel oxyhydroxide in the case of the positive electrode - is embedded.

4. Secondary electrochemical element according to any of the preceding claims, **characterized in that** the positive electrode and/or negative electrode take the form of thin layers having a thickness between 50 µm and 500 µm.

5. Secondary electrochemical element according to any of the preceding claims, **characterized in that** the aqueous electrolyte contains a dissolved hydroxide compound in a proportion between 0.1 M and 10 M.

6. Secondary electrochemical element according to any of the preceding claims, **characterized in that** the aqueous electrolyte includes a sulfate compound, especially alkali metal or alkaline earth metal sulfate, especially in a concentration between 0.001% and 0.1% by weight.

7. Secondary electrochemical element according to any of the preceding claims, **characterized in that** it comprises a gas-tight and/or liquid-tight housing made from stainless steel or from nickel-plated steel or stainless steel and enclosing the electrodes, the separator and the electrolyte in a fluid-tight manner.

## Revendications

1. Élément électrochimique secondaire comprenant :
1.1 une électrode négative contenant :
1.1.1 un conducteur de courant,
1.1.2 en tant que matériau de stockage à base de carbone, qui permet le stockage d'une charge électrique dans l'électrode par formation d'une double couche électrique (double couche de Hemlholtz), du charbon actif et/ou du graphène, et
1.1.3 un matériau de stockage d'H2 non à base de carbone, qui peut chimisorber de l'hydrogène et/ou stocker de l'hydrogène sous la forme d'un hydrure métallique,
1.2 une électrode positive contenant :
1.2.1 un conducteur de courant et
1.2.2 de l'hydroxyde de nickel et/ou de l'oxyhydroxyde de nickel,
1.3 un séparateur poreux, qui sépare l'électrode négative et l'électrode positive l'une de l'autre, ainsi que
1.4 un électrolyte alcalin aqueux, avec lequel les électrodes et le séparateur sont imprégnés,
1.5 l'électrode négative contenant le matériau de stockage à base de carbone en une proportion comprise entre 5 % en poids et 14,9 % en poids,
1.6 l'électrode négative comprenant le matériau de stockage d'H2 en une proportion comprise entre 85 % en poids et 94,9 % en poids,
1.7 l'électrode négative comprenant un liant d'électrode en une proportion comprise entre 0,1 % en poids et 10 % en poids,
1.8 le matériau de stockage à base de carbone et le matériau de stockage d'H2 présentant une répartition uniforme dans l'électrode négative, **caractérisé en ce que**
1.9 le matériau de stockage d'H2 est un alliage AB₂, un alliage AB₅, un alliage A₂B₇ ou un alliage AB₃, et
1.10 le conducteur de courant de l'électrode positive et de l'électrode négative est formé par une mousse métallique.

2. Élément électrochimique secondaire selon la revendication 1 ou la revendication 2, **caractérisé en ce que** l'électrode négative et/ou l'électrode positive contiennent un agent conducteur.

3. Élément électrochimique secondaire selon l'une quelconque des revendications précédentes, **caractérisé en ce que** le conducteur de courant de l'électrode positive et/ou de l'électrode négative forme une matrice de conduction tridimensionnelle, dans laquelle le matériau de stockage respectif, dans le cas de l'électrode positive l'hydroxyde de nickel et/ou l'oxyhydroxyde de nickel, est incorporé.

4. Élément électrochimique secondaire selon l'une quelconque des revendications précédentes, **caractérisé en ce que** l'électrode positive et/ou l'électrode négative sont configurées sous la forme de couches minces d'une épaisseur comprise entre 50 µm et 500 µm.

5. Élément électrochimique secondaire selon l'une quelconque des revendications précédentes, **caractérisé en ce que** l'électrolyte aqueux contient un composé d'hydroxyde dissous en une proportion comprise entre 0,1 M et 10 M.

6. Élément électrochimique secondaire selon l'une quelconque des revendications précédentes, **caractérisé en ce que** l'électrolyte aqueux comprend un composé de sulfate, notamment un sulfate alcalin ou alcalino-terreux, notamment en une concentration comprise entre 0,001 et 0,1 % en poids.

7. Élément électrochimique secondaire selon l'une quelconque des revendications précédentes, **caractérisé en ce qu'**il comprend un boîtier étanche aux gaz et/ou aux liquides en acier inoxydable ou en acier ou acier inoxydable nickelé, qui entoure les électrodes, le séparateur et l'électrolyte de manière étanche aux liquides.
